# EUROPÄISCHE PATENTSCHRIFT

(11) **EP 3 704 928 B1**
(45) Veröffentlichungstag und Bekanntmachung des Hinweises auf die Patenterteilung: **16.08.2023**
(21) Anmeldenummer: 19209699.8
(22) Anmeldetag: 18.11.2019
(51) Int. Cl.: A01D 67/00, B62D 9/00, B62D 55/112, B62D 55/02, A01B 69/00, B62D 11/24

(54) **ERNTEMASCHINE SOWIE VERFAHREN ZUR ERNTE MITTELS EINER ERNTEMASCHINE**
HARVESTING MACHINE AND METHOD FOR HARVESTING BY MEANS OF A HARVESTING MACHINE
MACHINE DE RÉCOLTE ET PROCÉDÉ DE RÉCOLTE AU MOYEN D'UNE MACHINE DE RÉCOLTE

(30) Priorität: 27.02.2019 DE 102019104953
(43) Veröffentlichungstag der Anmeldung: 09.09.2020
(73) Patentinhaber: CLAAS Selbstfahrende Erntemaschinen GmbH, 33428 Harsewinkel (DE)
(72) Erfinder: Silies, Andreas, 48488 Emsbüren (DE); Rackow, Sascha, 33098 Paderborn (DE); Meier, Wolfgang, 33165 Lichtenau (DE)
(74) Vertreter: CLAAS Gruppe

(56) Entgegenhaltungen:
- DE-A1-102011 114 536
- GB-A- 2 393 696
- US-A- 5 191 952
- US-A1- 2016 332 681

## Beschreibung

Die vorliegende Anmeldung betrifft eine mit Raupenlaufwerken ausgestattete Erntemaschine zur Ernte von auf einem Arbeitsfeld befindlichem Erntegut gemäß dem Oberbegriff von Anspruch 1. Die Erntemaschine kann insbesondere von einem Feldhäcksler gebildet sein. Weiterhin umfasst die vorliegende Anmeldung ein Verfahren zur Bearbeitung eines Arbeitsfeldes mittels einer mit Raupenlaufwerken ausgestatteten Erntemaschine gemäß dem Oberbegriff von Anspruch 9.

Die Erntemaschine umfasst mindestens zwei Raupenlaufwerke, die mit einer Vorderachse der Erntemaschine zusammenwirken. Die Raupenlaufwerke sind jeweils auf gegenüberliegenden Seiten der Erntemaschine angeordnet. Sie umfassen jeweils zwei in Fahrtrichtung der Erntemaschine hintereinander angeordnete Haupträder ("Idlerwheels") sowie mindestens ein zwischen den Haupträdern angeordnetes Hilfsrad ("Midroller"). Die Haupträder sind von einem Laufgurt umspannt, mittels dessen die Raupenlaufwerke gegenüber dem Untergrund abrollen. Mindestens eines der Haupträder ist antreibbar, sodass ein Antriebsmoment über das Hauptrad auf den Laufgurt übertragbar und auf diese Weise die Erntemaschine relativ zu dem Untergrund bewegbar ist. Das Hilfsrad dient dazu, eine Aufstandsfläche des jeweiligen Raupenlaufwerks zu erhöhen, sodass eine Flächenpressung auf dem Untergrund möglichst gering ist. Das Hilfsrad weist typischerweise einen deutlich geringeren Durchmesser auf als die Haupträder. Um eine Kraftübertragung in den Untergrund über das Hilfsrad bewerkstelligen zu können, wirkt letzteres mit einem unteren Abschnitt des Laufgurts zusammen, der in unmittelbarem Kontakt mit dem Untergrund steht.

Derartige Erntemaschinen und Verfahren sind im Stand der Technik bereits bekannt. Hierzu wird insbesondere auf das Europäische Patent EP 1 840 018 B1 sowie die Deutsche Patentanmeldung DE 10 2008 033 067 A1 hingewiesen. Diese offenbaren jeweils Raupenlaufwerke, die zur Verwendung an einen Erntefahrzeug geeignet sind. Insbesondere die letztgenannte Schrift offenbart ein Raupenlaufwerk, das an einem Feldhäcksler angeordnet ist. Eine weitere Verbindung eines Raupenlaufwerks mit einem Erntefahrzeug ist aus der Deutschen Patentanmeldung DE 10 2011 114 536 A1 bekannt.

Grundsätzlich besteht insbesondere im Zuge der Grasernte das Problem, dass bei der Verwendung von Raupenlaufwerken an einer Erntemaschine während des Wendemanövers im Vorgewende der jeweiligen Arbeitsfläche nicht unerhebliche Beschädigungen der Grasnarbe auftreten können, die auf den Eintrag besonders ausgeprägter Scherkräfte von dem Laufgurt in den Untergrund zurückzuführen sind. Dies liegt darin begründet, dass der Laufgurt mit seiner vergleichsweise großen Fläche auf dem Untergrund aufsteht und diese Fläche während des Wendemanövers entlang einer Kurve über den Untergrund geführt wird, wobei es prinzipbedingt zu einer Abscherung des Laufgurts gegenüber dem Untergrund kommt.

Mithin ist es die Aufgabe der vorliegenden Anmeldung, eine Erntemaschine bereitzustellen, mittels der in den jeweiligen Untergrund eingetragene Scherkräfte im Zuge der Ausführung eines Wendemanövers reduzierbar sind.

Die zugrunde liegende Aufgabe wird erfindungsgemäß durch eine Erntemaschine mit den Merkmalen des Anspruchs 1 gelöst. Diese umfasst an ihren Raupenlaufwerken jeweils mindestens ein Abhebeorgan, mittels dessen zumindest das vordere der beiden Haupträder des jeweiligen Raupenlaufwerks ausgehend von einer Nullposition in eine Abhebeposition überführbar ist. Die "Nullposition" ist dabei so definiert, dass bei ihrem Vorliegen das vordere Hauptrad über den Laufgurt Kräfte der Erntemaschine auf das Arbeitsfeld übertragen kann. Mit anderen Worten steht das Raupenlaufwerk mit dem vorderen Hauptrad auf dem Arbeitsfeld mittelbar auf. Bei Vorliegen des vorderen Hauptrades in seiner "Abhebeposition" ist ersteres hingegen derart von dem Arbeitsfeld abgehoben, dass eine in Kontakt mit der Oberfläche des Arbeitsfeldes befindliche Kontaktfläche des Laufgurts gegenüber einer Situation, in der das vordere Hauptrad in seiner Nullposition vorliegt, verringert ist. Mittels des Abhebens des vorderen Hauptrades wird erreicht, dass eine Kontaktfläche des Laufgurts, mit der selbiger sich in Kontakt mit der jeweiligen Oberfläche des Arbeitsfeldes befindet, verringert wird.

Grundsätzlich sieht die Erfindung vor, mehrere Abhebeorgane mittels eines gemeinsamen Hydrauliksystems zu betreiben. Zudem wird - ebenfalls bei Verwendung eines Hydrauliksystems zum Antrieb des Abhebeorgans - eine geringere Menge des jeweiligen Arbeitsfluids (typischerweise Hydrauliköl) benötigt, um das Abheben des vorderen Hauptrades zu bewirken. Aufgrund der zu bewegenden Massen ist mindestens ein zweites Abhebeorgan vorgesehen. Ebenso ist die Verwendung von mehr als zwei Abhebeorganen denkbar. Sofern mehrere Abhebeorgane vorhanden sind, ist es denkbar und ggf. vorteilhaft, nur ein Abhebeorgan für das Abheben des vorderen Hauptrades zu verwenden, während die übrigen Abhebeorgane inaktiv sind. Dies kann sich zum Beispiel dadurch ausdrücken, dass die übrigen Abhebeorgane ihre Stellung im Zuge des Abhebens des vorderen Hauptrades nicht ändern.

Weiterhin umfasst die erfindungsgemäße Erntemaschine mindestens eine Steuerungseinrichtung, mittels der die beschriebene Abhebung des vorderen Hauptrads automatisch in Abhängigkeit eines Lenkwinkels der Erntemaschine auslösbar ist. Insbesondere kann der Lenkwinkel in Abhängigkeit einer Stellung eines Lenkrades der Erntemaschine gemessen werden. Unter einem "Lenkrad" wird im Sinne der vorliegenden Anmeldung mindestens ein Rad der Erntemaschine verstanden, mittels dessen letztere auf dem Arbeitsfeld in eine Kurvenfahrt zwingbar ist. Typischerweise sind die beiden an der jeweiligen Hinterachse der Erntemaschine angeordneten Räder, die in aller Regel in Form typischer Rundreifen ausgeführt sind, als Lenkräder ausgebildet, die um eine zumindest im Wesentlichen vertikale Lenkachse relativ zu der übrigen Erntemaschine verschwenkbar sind.

Bezugnehmend auf ein "Raupenlaufwerk" im Sinne der vorliegenden Anmeldung besteht ein wesentlicher Vorteil gegenüber einem typischen Rad darin, dass die Kontaktfläche zwischen der Erntemaschine und dem jeweiligen Untergrund bei Verwendung eines Raupenlaufwerks deutlich vergrößert ist. Hierdurch ist eine Flächenpressung zwischen dem Laufgurt des Raupenlaufwerks und dem Untergrund im Vergleich zu der Flächenpressung zwischen einer Kontaktfläche eines Rades und dem Untergrund erheblich reduziert. Hieraus können sowohl verringerte Beschädigungen des jeweiligen Untergrundes als auch eine verbesserte Eignung der Erntemaschine zum Einsatz auf wenig tragfähigen Untergrund, beispielsweise in relativ sumpfigem Gebiet, resultieren. Das mindestens eine Hilfsrad, typischerweise umfasst ein Raupenlaufwerk eine Mehrzahl von Hilfsrädern, dient dazu, den jeweils unteren Abschnitt des Laufgurts durchgehend in Kontakt mit dem Untergrund zu halten, das heißt ein Abheben des Laufgurts beispielsweise im Bereich von Unebenheiten des Untergrunds, zu vermeiden.

Die erfindungsgemäße Erntemaschine hat viele Vorteile. Insbesondere ist sie dazu hergerichtet, automatisch im Zuge der Ausführung eines Wendemanövers im Bereich eines Vorgewendes eines jeweiligen Arbeitsfeldes das vordere Hauptrad des Raupenlaufwerks bzw. der Raupenlaufwerke mittels eines Abhebeorgans von dem Arbeitsfeld abzuheben. Mittels der Steuerungseinrichtung ist es dabei vor allem möglich, diesen Vorgang des Abhebens automatisch zu gestalten, sodass kein weiteres Zutun eines jeweiligen Maschinenführers erforderlich ist. Insbesondere ist es denkbar, dass ein besagter Maschinenführer entweder manuell, halbautomatisch oder vollautomatisch die Ausführung des jeweiligen Wendemanövers bewirken kann, wobei im Zuge desselben beispielsweise ein bestimmter Grenzlenkwinkel der Erntemaschine überschritten wird, sodass die Steuerungseinrichtung automatisch das Abhebeorgan des jeweiligen Raupenlaufwerks zumindest mittelbar ansteuert und dadurch die Überführung des vorderen Hauptrades von seiner Nullposition in seine Abhebeposition bewirkt. Das Abheben hat letztlich zur Folge, dass die Kontaktfläche zwischen dem Laufgurt und der Oberfläche des Arbeitsfeldes reduziert ist, wodurch die im Zuge des Wendemanövers in das Arbeitsfeld eingetragenen Scherkräfte seitens des Raupenlaufwerks bzw. des zugehörigen Laufgurts deutlich reduziert werden. Im Ergebnis kann folglich mittels der erfindungsgemäßen Erntemaschine das am Ende eines jeweiligen Arbeitsstreifens auszuführende Wendemanöver deutlich schonender für das Arbeitsfeld ausgeführt werden. Mit anderen Worten ist unter Verwendung der erfindungsgemäßen Erntemaschine keine Beschädigung beispielsweise einer Grasnarbe des Arbeitsfeldes in solchem Ausmaß zu erwarten, wie dies unter Verwendung einer bekannten Erntemaschine zu erwarten wäre, der mit Raupenlaufwerken ausgestattet ist.

In einer vorteilhaften Ausgestaltung der erfindungsgemäßen Erntemaschine liegt das mindestens eine Abhebeorgan bei Vorliegen des vorderen Hauptrades in seiner Nullposition in einer ausgefahrenen Stellung und bei Vorliegen in seiner Abhebeposition in einer eingefahrenen Stellung vor. Dies insbesondere dann der Fall, wenn das Abhebeorgan von einer Kolben-Zylinder-Einheit gebildet ist, die insbesondere mit einem Hydrauliksystem zusammenwirken kann. Vorteilhafterweise ist das Abhebeorgan zumindest im Wesentlichen, vorzugsweise vollständig, horizontal ausgerichtet.

Es ist vorgesehen, dass mindestens zwei Abhebeorgane, vorzugsweise sämtliche Abhebeorgane, mit einem gemeinsamen Hydrauliksystem zusammenwirken. Ein solches Hydrauliksystem umfasst typischerweise mindestens eine Hydraulikpumpe, mittels der ein Arbeitsfluid pumpbar und unter Druck setzbar ist. Die Hydraulikpumpe ist dabei mittels Hydraulikleitungen mit dem Abhebeorgan verbunden, das insbesondere von einer Kolben-Zylinder-Einheit gebildet sein kann. Bei der Verwendung mehrerer Abhebeorgane kann es vorteilhaft sein, wenn die einzelnen Abhebeorgane mit einem gemeinsamen Hydrauliksystem zusammenwirken. Dabei können die Abhebeorgane insbesondere untereinander mittels Hydraulikleitungen miteinander verbunden sein.

Es ist vorgesehen, dass mindestens ein Abhebeorgan zumindest zeitweise von dem Hydrauliksystem trennbar ist. Auf diese Weise ist es möglich, zumindest zeitweise mittels Betriebs des Hydrauliksystems lediglich eines der Abhebeorgane zu betreiben, während das andere insbesondere inaktiv sein kann. Dies ist insbesondere für den Fall des Abhebens des vorderen Hauptrades denkbar, in dem vorzugsweise nur ein Abhebeorgan betätigt wird, während mindestens ein weiteres Abhebeorgan von dem Hydrauliksystem getrennt ist und mithin seine Stellung im Zuge des Abhebens des vorderen Hauptrades nicht verändert.

Grundsätzlich kann es - auch unabhängig von einem gemeinsamen Hydrauliksystem - vorteilhaft sein, wenn sämtliche Abhebeorgane unabhängig voneinander ansteuerbar sind. Besonders vorteilhaft kann es dabei sein, wenn mindestens ein Abhebeorgan aktivierbar ist, während mindestens ein anderes Abhebeorgan inaktiv ist.

Insbesondere hat es sich herausgestellt, dass je nach Ausgestaltung der Abhebeorgane der Betrieb eines jeweiligen Abhebeorgans infolge von Fliehkräften, die bei einer Kurvenfahrt der Erntemaschine im Zuge eines Wendemanövers wirken, schwierig ist und ein notwendiges Kraftniveau, das für die Überwindung sowohl der Fliehkräfte als auch der jeweiligen Gewichtskräfte erforderlich wäre, nicht aufgebracht werden kann. In einem solchen Fall kann es vorteilhaft sein, dass jeweilig betroffene Abhebeorgan inaktiv zu stellen, insbesondere von einem gemeinsamen Hydrauliksystem zu trennen, und die Überführung des jeweiligen vorderen Hauptrades zwischen seiner Nullposition und seiner Abhebeposition ausschließlich mittels eines einzigen Abhebeorgans vorzunehmen. Von der Trennung von dem Hydrauliksystem betroffen sind vornehmlich solche Abhebeorgane, die zumindest im Wesentlichen vertikal ausgerichtet sind.

Weiterhin ist eine solche Erntemaschine von besonderem Vorteil, deren Raupenlaufwerke jeweils einen zweiteiligen Rahmen aufweisen, wobei eines der Haupträder eines jeweiligen Raupenlaufwerks an einem Rahmenteil und das andere Hauptrad an dem anderen Rahmenteil des Rahmens angeordnet sind. Ferner sind die Rahmenteile in Kraft übertragender Weise miteinander verbunden sowie relativ zueinander um eine zu der Vorderachse der Erntemaschine parallele Schwenkachse verschwenkbar. Die Verschwenkung der beiden Rahmenteile relativ zueinander ist insbesondere erforderlich, um das vordere Hauptrad des Raupenlaufwerks zwischen seiner Abhebeposition und seiner Nullposition zu überführen. Vorteilhafterweise sind die Schwenkachse und die Vorderachse voneinander beabstandet angeordnet. Eine solche Ausgestaltung eines jeweiligen Raupenlaufwerks ist zwecks Bewegung zumindest des vorderen Hauptrades in einer vertikalen Richtung besonders vorteilhaft. Insbesondere ist es denkbar, einen jeweiligen vorderen Rahmenteil, der mit dem vorderen Hauptrad zusammenwirkt, anzuheben und dabei um die Schwenkachse relativ zu dem anderen Rahmenteil zu verschwenken. Eine solche Bewegung kann mittels Aufbringens einer Zugkraft vertikal oberhalb der Schwenkachse erfolgen, was insbesondere mittels des Einfahrens eines als Kolben-Zylinder-Einheit ausgebildeten Abhebeorgans möglich ist.

In diesem Zusammenhang kann es besonders vorteilhaft sein, wenn mindestens eines der Abhebeorgane derart ausgebildet ist, dass es sich entgegengesetzt an beiden Rahmenteilen abstützt. Das heißt, dass mittels des Abhebeorgans ausgeübte Kräfte entgegengesetzt auf die beiden Rahmenteile wirken, wodurch die Verschwenkung und mithin das Abheben des vorderen Hauptrades zumindest unterstützbar ist. Am Beispiel eines zumindest im Wesentlichen horizontal ausgerichteten Abhebeorgans, das mit beiden Rahmenteilen zusammenwirkt, bedeutet dies, dass eine auf den einen Rahmenteil ausgeübte Zugkraft analog auch in den anderen Rahmenteil eingetragen wird. Dies hat den besonderen Vorteil, dass das erfindungsgemäße Anheben des vorderen Hauptrades sich auf eine Aufstandskraft des hinteren Hauptrades positiv auswirkt. Das hintere Hauptrad dient nämlich gewissermaßen als ein Teilwiderlager für die auf das vordere Hauptrad ausgeübte Abhebekraft, was zur Folge hat, dass das hintere Hauptrad ebenfalls mit einer abhebenden Kraft beaufschlagt wird. Hierdurch wird die Aufstandskraft des hinteren Hauptrades reduziert und ein Eintrag von Scherkräften in das Arbeitsfeld im Bereich des hinteren Hauptrades zumindest reduziert. Die mittels des jeweiligen Raupenlaufwerks in das Arbeitsfeld eingetragenen Vertikalkräfte verlagern sich in einer solchen Situation weiter auf das mindestens eine Hilfsrad, welches aufgrund seiner geringen Aufstandsfläche vergleichsweise geringe Scherkräfte in den Untergrund einträgt. Auf diese Weise kann besonders effektiv zur Schonung des Untergrundes beigetragen werden.

Weiterhin kann es von Vorteil sein, wenn mindestens ein Abhebeorgan mit einem der Rahmenteile zusammenwirkt und gegen das mindestens eine Hilfsrad abgestützt ist. Solch ein Abhebeorgan kann insbesondere den jeweiligen Rahmenteil gegen das Hilfsrad in eine von dem Untergrund abgewandte Richtung "abdrücken", das heißt nach oben drücken. Dies bewirkt eine Verschwenkung des jeweiligen Rahmenteils gegenüber dem anderen Rahmenteil und gleichermaßen das Abheben des vorderen Hauptrades. Entsprechend versteht es sich, dass der Rahmenteil, mit dem das Abhebeorgan zusammenwirkt, vorzugsweise derjenige ist, an dem das vordere Hauptrad angeordnet ist.

Die erfindungsgemäße Erntemaschine weiter ausgestaltend ist die Kontaktfläche des Laufgurts bei Vorliegen des vorderen Hauptrades in dessen Abhebeposition mindestens 10 % gegenüber der Kontaktfläche bei Vorliegen des vorderen Hauptrades in dessen Nullposition reduziert. Vorzugsweise beträgt diese Reduktion mindestens 20 %, weiter vorzugsweise mindestens 30 %. Dabei versteht es sich, dass eine umso kleinere Kontaktfläche des Laufgurts zu einer umso geringeren Eintragung von Scherkräften in den jeweiligen Untergrund führt.

Die erfindungsgemäße Erntemaschine weiter ausgestaltend umfassen dessen Raupenlaufwerke jeweils mindestens ein Dämpfungselement, das mit mindestens einem Rahmenteil des jeweiligen Raupenlaufwerks zusammenwirkt, sodass eine Verschwenkung des jeweiligen Rahmenteils relativ zu dem anderen Rahmenteil um die genannte Schwenkachse mittels des Dämpfungselements dämpfbar ist. Vorteilhafterweise ist das Dämpfungselement von einem Abhebeorgan gebildet, wobei ein solches Abhebeorgan im Zuge des Abhebens des vorderen Hauptrades aktiv wirken kann und sodann im Zuge einer späteren Absenkung des vorderen Hauptrades als Dämpfungselement wirkt. Dem liegt die Überlegung zugrunde, dass das Absenken des vorderen Hauptrades nicht notwendigerweise aktiv betrieben werden muss, sondern allein mittels Wirkung der Gewichtskraft des vorderen Hauptrades und der gemeinsam mit diesem abgehobenen Komponenten bestrebt ist, sich in Richtung des Arbeitsfeldes abzusenken. Das mindestens eine Abhebeorgan kann somit besonders gut in einer passiven Dämpfungsfunktion als Dämpfungselemente verwendet werden. Die Ausbildung eines separaten Dämpfungselements ist ebenfalls denkbar.

Weiter vorzugsweise ist das mindestens eine Abhebeorgan, vorzugsweise sämtliche Abhebeorgane, in Form einer Kolben-Zylinder-Einheit ausgebildet. Dabei ist das jeweilige Abhebeorgan vorzugsweise derart ausgebildet, dass dessen Kolben sowohl aktiv aus dem zugehörigen Zylinder ausfahrbar als auch aktiv in den zugehörigen Zylinder einfahrbar ist ("Doppeltwirkender Zylinder"). Derartige Abhebeorgane können besonders gut hydraulisch betrieben werden und auf diese Weise die nicht unerhebliche Gewichtskraft des vorderen Hauptrades bewältigen.

Ausgehend von dem Verfahren der eingangs beschriebenen Art wird die zugrunde liegende Aufgabe erfindungsgemäß durch das Verfahren gemäß Anspruch 9 gelöst. Dieses umfasst den folgenden Verfahrensschritt:
- In Abhängigkeit eines Lenkwinkels der Erntemaschine wird zumindest ein vorderes Hauptrad mindestens eines der Raupenlaufwerke der Erntemaschine von einer Oberfläche des Arbeitsfeldes abgehoben, sodass sich eine in Kontakt mit der Oberfläche befindliche Kontaktfläche eines Laufgurts des Raupenlaufwerks zumindest zeitweise verringert.

Unter einem "Arbeitsstreifen" wird im Sinne der vorliegenden Anmeldung ein Teil des jeweils zu bearbeitenden Arbeitsfeldes verstanden, der mittels der Erntemaschine bearbeitet wird. Eine Breite des Arbeitsstreifens entspricht dabei zumindest im Wesentlichen einer Arbeitsbreite der Erntemaschine. Typischerweise sind die einzelnen Arbeitsstreifen eines Arbeitsfeldes parallel zueinander ausgerichtet sowie zumindest im Wesentlichen in sich gerade. Eine Unterteilung des Arbeitsfeldes in eine Vielzahl derartiger Arbeitsstreifen ist für eine möglichst effiziente Bearbeitung des Arbeitsfeldes von Vorteil.

Dabei versteht es sich, dass die Erntemaschine nach einer Fertigstellung eines jeweiligen Arbeitsstreifens, bei der sie typischerweise in einem Randbereich des jeweiligen Arbeitsfeldes angekommen ist, in einem Vorgewende des Arbeitsfeldes ein Wendemanöver ausführen muss, um sodann den jeweils nächsten Arbeitsstreifen bearbeiten zu können. Typischerweise sind die einzelnen Arbeitsstreifen, die nacheinander mittels der Erntemaschine bearbeitet werden, unmittelbar nebeneinander angeordnet, sodass sie eine gemeinsame Grenze aufweisen. Ebenso ist es denkbar, dass aufeinanderfolgend bearbeitete Arbeitsstreifen beabstandet voneinander auf dem Arbeitsfeld angeordnet sind, um der Erntemaschine das Wendemanöver zu vereinfachen. Dies kann insbesondere von Vorteil sein, wenn die Erntemaschine einen vergleichsweise großen Wendekreis im Verhältnis zu seiner Arbeitsbreite und somit zu der Breite des jeweiligen Arbeitsstreifens aufweist. Neben einer Lenkung der Erntemaschine im Zuge des Wendemanövers können selbstverständlich auch durch andere Umstände motivierte Lenkbewegungen vorgenommen werden, deren Indikation zur Abhebung zumindest des vorderen Hauptrades ebenso gegeben ist.

Ein jeweiliges Wendemanöver wird typischerweise in einem Randbereich des jeweiligen Arbeitsfeldes ausgeführt. Dieser zum Wenden vorgesehene Randbereich wird in der vorliegenden Anmeldung als das sogenannte "Vorgewende" bezeichnet.

Das erfindungsgemäße Verfahren ist mittels der erfindungsgemäßen Erntemaschine besonders einfach ausführbar. Die Vorteile, die sich im Zuge der Ausführung des Verfahrens ergeben, sind vorstehend bereits in Verbindung mit der Erntemaschine dargelegt worden. Insbesondere trägt das erfindungsgemäße Verfahren dazu bei, die Oberfläche des jeweilig zu bearbeiteten Arbeitsfeldes, insbesondere eine Grasnarbe, vor dem Eintrag übermäßiger Scherkräfte im Zuge einer Kurvenfahrt der Erntemaschine, insbesondere im Zusammenhang mit der Ausführung des Wendemanövers, zu schützen und somit Beschädigungen an dem Arbeitsfeld zumindest zu reduzieren.

Weiterhin kann der Vorteil erwirkt werden, die Kontaktfläche des Laufgurts während einer Fahrt über eine öffentliche Straße zu reduzieren. Auf diese Weise kann der ansonsten durchaus erhebliche Verschleiß des Laufgurts im Zuge des Transfers der Erntemaschine zwischen den zu bearbeiteten Schlägen, der oftmals über eine Straße stattfindet, deutlich vermindert werden. Entsprechend ist es vorteilhaft, das vordere Hauptrad des Raupenlaufwerks in Abhängigkeit eines Nutzungszustands abzuheben, wobei dies insbesondere für den Nutzungszustand "Transfer" sinnvoll sein kann.

Gemäß dem erfindungsgemäßen Verfahren wird das Abheben des vorderen Hauptrades mittels mindestens eines Abhebeorgans vorgenommen, das vorzugsweise von einer Kolben-Zylinder-Einheit gebildet ist. Insbesondere ist es denkbar, dass der Kolben eines solchen Abhebeorgans im Zuge des Abhebens des vorderen Hauptrades, vorzugsweise vollständig, eingefahren wird. Gleichermaßen kann es Vorteil sein, für diesen Prozess eine Mehrzahl von Abhebeorganen zu verwenden, wobei insbesondere die Aufteilung der Funktion eines einzigen Abhebeorgans in zwei oder mehrere parallel geschaltete Abhebeorgane denkbar ist.

Weiterhin kann es vorteilhaft sein, dass trotz Vorhandenseins einer Mehrzahl von Abhebeorganen zwecks Überführung des vorderen Hauptrades eines jeweiligen Raupenlaufwerks von seiner Nullposition in seine Abhebeposition zumindest eines der Abhebeorgane inaktiv ist. Dies kann insbesondere ein Abhebeorgan betreffen, das zumindest im Wesentlichen senkrecht ausgerichtet ist und im Zuge einer Kurvenfahrt der jeweiligen Erntemaschine mit Fliehkräften beaufschlagt ist. Eine hierdurch bedingte Belastung des Abhebeorgans kann derart ausgeprägt sein, dass dessen Verwendung, insbesondere ein Ausfahren des jeweiligen Kolbens aus dem zugehörigen Zylinder, stark erschwert ist. Die Deaktivierung eines solchen Abhebeorgans im Zuge der Abhebung des vorderen Hauptrades kann mithin vorteilhaft sein. Diese Deaktivierung kann insbesondere dadurch erfolgen, dass das jeweilige Abhebeorgan von einem gemeinsamen Hydrauliksystem, an das zumindest eine Mehrzahl vorhandener Abhebeorgane, vorzugsweise sämtliche Abhebeorgane, angeschlossen sind, zeitweise getrennt wird. Eine solche Trennung kann insbesondere für die Dauer eines jeweiligen Abhebevorgangs vorgenommen werden.

In einer vorteilhaften Ausgestaltung des erfindungsgemäßen Verfahrens wird das Abheben des vorderen Hauptrades automatisch in Abhängigkeit eines Lenkwinkels der Erntemaschine ausgelöst, insbesondere in Abhängigkeit eines Lenkwinkels eines Lenkrades der Erntemaschine. Ein oberer Grenzlenkwinkel, ab dessen Überschreitung das Abheben des vorderen Hauptrades abgehoben wird, beträgt maximal 20°, vorzugsweise maximal 17,5°, weiter vorzugsweise maximal 15°, gegenüber einer Nulllenkung, bei deren Einstellung die Erntemaschine geradeaus fährt. Es ist vorteilhaft, wenn das automatische Abheben des vorderen Hauptrades des jeweiligen Raupenlaufwerks nicht bereits bei jedem, insbesondere nicht bei besonders geringem Lenkeinschlag, ausgelöst wird. Insbesondere ist es üblich, dass im Zuge der Überstreichung eines jeweiligen Arbeitsstreifens des Arbeitsfeldes seitens des Maschinenführers oder auch automatisch zumindest kleinere Kurskorrekturen vorgenommen werden, die die Erntemaschine von einer vollständig und exakt geraden Fahrspur abbringen. Derart kleinere Lenkkorrekturen sollten vorzugsweise nicht unmittelbar zu dem Abheben des vorderen Hauptrades des Raupenlaufwerks führen. Letzteres sollte bewusst auf erhebliche Lenkbewegungen, insbesondere ein jeweiliges Wendemanöver im Bereich eines Vorgewendes eines Arbeitsfeldes, beschränkt sein. Ein solches Wendemanöver unterscheidet sich von den üblichen Kurskorrekturen während der Bearbeitung eines Arbeitsstreifens durch den betragsmäßig stark abweichenden Lenkeinschlag bzw. Lenkwinkel des jeweiligen Lenkrades. Entsprechend ist es sinnvoll, das automatische Abheben des vorderen Hauptrades von der Überschreitung eines bestimmten Grenzlenkwinkels abhängig zu machen, der einen nicht vernachlässigbaren Betrag annimmt. Insbesondere ist eine Beschädigung des Arbeitsfeldes lediglich in solchen Fällen zu erwarten, in denen ein derartiger Grenzlenkwinkel überschritten wird.

Sofern das Abheben des vorderen Hauptrades in Abhängigkeit von einem Lenkwinkel ausgelöst wird, kann es besonders vorteilhaft sein, wenn selbiges erst dann ausgelöst wird, wenn der Lenkwinkel den oberen Grenzlenkwinkel mindestens für die Dauer eines Schwellenzeitraums überschreitet, wobei die Dauer des Schwellenzeitraums vorzugsweise mindestens 2 Sekunden, weiter vorzugsweise mindestens 3 Sekunden, beträgt. Auf diese Weise ist sichergestellt, dass nicht bereits eine besonders kurze Überschreitung des Grenzlenkwinkels das Abheben des vorderen Hauptrades auslöst.

Analog zu dem Abheben des vorderen Hauptrades kann es umgekehrt ferner von Vorteil sein, wenn das vordere Hauptrad automatisch in Abhängigkeit des Lenkwinkels wieder abgesenkt wird, wobei ein unterer Grenzlenkwinkel, dessen Unterschreitung die Absenkung auslöst, höchstens 15°, vorzugsweise höchstens 13°, weiter vorzugsweise höchstens 11°, gegenüber der Nulllenkung beträgt. Auch hier ist vorzugsweise ein Schwellenzeitraum vorgesehen, dessen Dauer zu überschreiten ist, bevor das automatische Absenken ausgelöst wird.

Weiterhin ist ein solches Verfahren von besonderem Vorteil, bei dem das vordere Hauptrad nach dem vollständigen Überstreichen eines jeweils letzte Arbeitsstreifens abgehoben und vor dem Beginn des Überstreichens des jeweils nächsten Arbeitsstreifens wieder abgesenkt wird. Bei der Durchführung dieses Verfahrens ist mit anderen Worten das vordere Hauptrad des jeweiligen Raupenlaufwerks während des Wendemanövers abgehoben, sodass die Kontaktfläche des Laufgurts mit der Oberfläche des Arbeitsfeldes während des Wendemanövers reduziert ist.

In einer weiterhin vorteilhaften Ausgestaltung des erfindungsgemäßen Verfahrens wird das Abheben des vorderen Hauptrades zumindest teilautomatisch auf eine Eingabe des die Erntemaschine bedienenden Maschinenführers hin ausgelöst. Insbesondere ist es denkbar, dass das Abheben des vorderen Hauptrades nach dem Überstreichen eines Arbeitsstreifens ohne weiteres Zutun des Maschinenführers erfolgt. Beispielsweise ist es denkbar, die Erntemaschine mit einer Positionierungseinrichtung, insbesondere einem GPS-Empfänger, auszustatten und von dieser Positionierungseinrichtung empfangene Daten zur automatischen Steuerung des Raupenlaufwerks zu verwenden.

Weiterhin ist eine Vorgehensweise zu bevorzugen, bei der das Abheben des vorderen Hauptrades vollautomatisch in Abhängigkeit mindestens eines Betriebsparameters der Erntemaschine erfolgt. Insbesondere ist es denkbar, das vordere Hauptrad in Abhängigkeit von einer Arbeitsposition eines Vorsatzgeräts der Erntemaschine abhängig zu machen. Wird das Vorsatzgerät beispielsweise angehoben, sodass es nicht zur Ernte des Ernteguts geeignet ist, kann das Abheben des vorderen Hauptrades ausgelöst werden. Ebenso ist es denkbar, dass das Abheben in Abhängigkeit von der relativen und/oder absoluten Position der Erntemaschine auf dem Arbeitsfeld erfolgt. Auf diese Weise ist der Maschinenführer vollständig von der Überwachung des Raupenlaufwerks hinsichtlich des Abhebens bzw. Absenkens des vorderen Hauptrades desselben entbunden.

Weiterhin kann ein solches Verfahren von Vorteil sein, bei dem das Absenken des vorderen Hauptrades vor dem Überstreichen eines jeweils als nächsten zu bearbeitenden Arbeitsstreifens zumindest teilautomatisch auf Eingabe des die Erntemaschine bedienenden Maschinenführers erfolgt. Besonders zu bevorzugen ist dabei ein solches Verfahren, bei dem das Absenken vollautomatisch erfolgt in Abhängigkeit mindestens eines Betriebsparameters der Erntemaschine. Auch hier kann es vorteilhaft sein, als Betriebsparameter die relative und/oder absolute Position der Erntemaschine auf dem Arbeitsfeld heranzuziehen. Ebenso ist auch hier die Verknüpfung mit der Arbeitsposition des Vorsatzgeräts und/oder ein gemessener Durchsatz in einem Einzugsbereich der Erntemaschine denkbar. Letzteres beruht auf der Überlegung, dass das vordere Hauptrad des jeweiligen Raupenlaufwerks jedenfalls dann abgesenkt werden sollte, wenn die Erntemaschine sich im Erntebetrieb befindet und Erntegut verarbeitet. Mittels dieser Verfahrensweise ist insbesondere sichergestellt, dass das Absenken des vorderen Hauptrades des Raupenlaufwerks nicht versehentlich vergessen werden kann, sodass sichergestellt ist, dass der untere Abschnitt des Laufgurts des Raupenlaufwerks im Zuge der Überstreichung des jeweils nächsten Arbeitsstreifens wieder mit seiner vollen Kontaktfläche mit der Oberfläche des Arbeitsfeldes in Kontakt steht.

Zur weiteren Automatisierung des gesamten Wendemanövers der Erntemaschine ist ferner ein solches Verfahren denkbar, bei dem das Wendemanöver zumindest teilautomatisch auf Eingabe des die Erntemaschine bedienenden Maschinenführers ausgeführt wird. Dabei werden sowohl das Abheben des vorderen Hauptrades des Raupenlaufwerks, als auch die Durchführung des Wendemanövers als solches, das heißt insbesondere die Lenkung der Erntemaschine, als auch das Absenken des vorderen Hauptrades vor dem Überstreichen des nächsten Arbeitsstreifens ohne Zutun des Maschinenführers ausgeführt. Beispielsweise ist es denkbar, dass der Maschinenführer nach dem Erreichen eines Endes eines jeweiligen Arbeitsstreifens mittels Betätigung eines Schalters das automatische Wendemanöver aktiviert, im Zuge dessen das vordere Hauptrad des jeweiligen Raupenlaufwerks automatisch erst abgehoben und schließlich wieder abgesenkt wird.

Vorteilhafterweise wird ein solches automatisches Wendemanöver vollautomatisch ausgeführt und zwar in Abhängigkeit von mindestens einem Betriebsparameters der Erntemaschine, insbesondere in Abhängigkeit seiner relativen und/oder absoluten Position auf dem Arbeitsfeld. Eine manuelle Auslösung des Wendemanövers ist sodann nicht erforderlich. Auch ist eine vollautomatische Abhebung des vorderen Hauptrades vor Befahren einer öffentlichen Straße denkbar.

Die erfindungsgemäße Erntemaschine sowie das erfindungsgemäße Verfahren werden nachstehend anhand eines Ausführungsbeispiels, das in den Figuren dargestellt ist, näher erläutert. Es zeigt:
- Fig. 1:: Einen Teilquerschnitt durch eine erfindungsgemäßen Erntemaschine, deren Raupenlaufwerke sich in ihrer Nullposition befinden,
- Fig. 2:: Der Teilquerschnitt gemäß Figur 1, wobei sich die Raupenlaufwerke in ihrer Abhebeposition befinden,
- Fig. 3:: Ein Schnitt eines Raupenlaufwerks, das sich in seiner Nullposition befindet und
- Fig. 4:: Eine Draufsicht auf ein Arbeitsfeld, das in eine Mehrzahl von Arbeitsstreifen unterteilt ist.

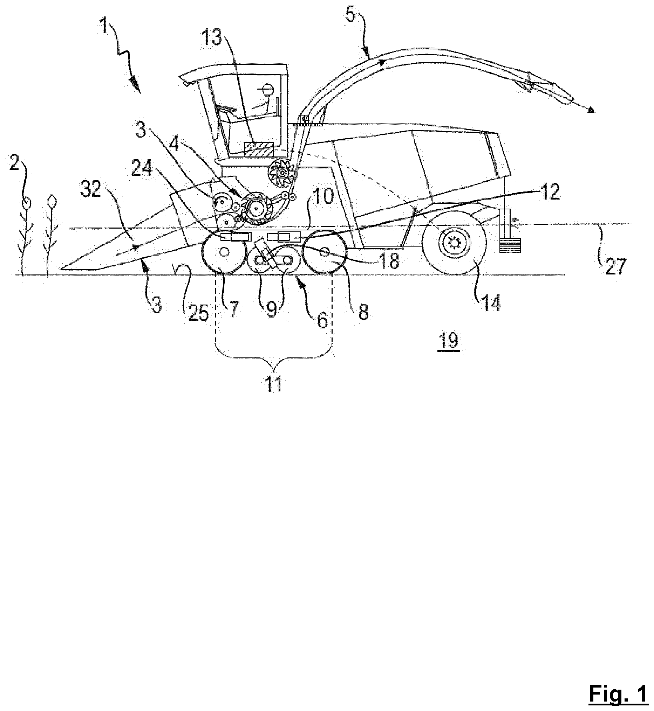

Das Ausführungsbeispiel, das in den **Figuren 1 bis 4** gezeigt ist, umfasst eine erfindungsgemäße Erntemaschine **1**, mittels der Erntegut **2** geerntet werden kann. Die Erntemaschine **1** ist hier von einem Feldhäcksler gebildet. Zur Ernte des Ernteguts **2** verfügt die Erntemaschine **1** über ein Vorsatzgerät **31** mit einem Einzugsbereich **32**, ein Förderorgan **3**, ein Häckselorgan **4** sowie ein Auswurforgan **5.** Mittels des Förderorgans **3** wird das Erntegut **2** in Richtung des Häckselorgans **4** gefördert, dort mittels des Häckselorgans **4** gehäckselt und schließlich in Richtung des Auswurforgans **5** befördert, mittels dessen das Erntegut **2** auf einen in den Figuren nicht dargestellten Transportbehälter geworfen wird.

Die erfindungsgemäße Erntemaschine **1** umfasst insgesamt zwei Achsen, nämlich eine Vorderachse und eine Hinterachse. An der Vorderachse wirkt die Erntemaschine **1** beidseitig mit jeweils einem Raupenlaufwerk **6** zusammen. An der Hinterachse verfügt die Erntemaschine **1** über typische Rundräder, die hier als Lenkräder **14** ausgebildet sind. Als solche sind die Lenkräder **14** um eine vertikale Achse drehbar ausgebildet, sodass der Erntemaschine **1** eine Änderung der Fahrtrichtung aufprägbar ist, das heißt die Erntemaschine **1** lenkbar ist.

Die Raupenlaufwerke **6** verfügen jeweils über zwei Haupträder **7**, **8** wobei ein Hauptrad **7** relativ zu dem jeweils anderen Hauptrad **8** betrachtet sowie in Fahrtrichtung der Erntemaschine **1** betrachtet weiter vorne angeordnet ist. Weiterhin verfügt jedes der Raupenlaufwerke **6** über zwei Hilfsräder **9**, die zwischen den Haupträdern **7**, **8** angeordnet sind und deren Durchmesser deutlich geringer ist als der der Haupträder **7**, **8**. Ferner weist jedes der Raupenlaufwerke **6** einen umlaufenden Laufgurt **10** auf, der die außenliegenden Haupträder **7**, **8** umspannt. Der Laufgurt **10** weist einen unteren Abschnitt **11** auf, mit dem er mit einer Oberfläche **25** eines jeweiligen Arbeitsfeldes **19** in unmittelbarem Kontakt treten kann. Die Hilfsräder **9** sind derart an dem jeweiligen Raupenlaufwerk **6** angeordnet, dass sie mit dem unteren Abschnitt **11** des Laufgurts **10** zusammenwirken, sodass eine Kontaktfläche **26**, die der Laufgurt **10** mit der Oberfläche **25** des Arbeitsfeldes **19** ausbildet, sich nicht im Zuge des Überfahrens einer Erhebung, insbesondere einem Hügel oder einem Gegenstand, nennenswert verkleinert. Mit anderen Worten sorgen die Hilfsräder **9** dafür, den Laufgurt **10** fortwährend auf die Oberfläche **25** des Arbeitsfeldes **19** zu drücken und auf diese Weise die Kontaktfläche **26** möglichst durchgehend auf einem maximalen Maß zu halten.

Jedes der Raupenlaufwerke **6** verfügt über ein Gurtspannorgan **24**, mittels dessen die beiden Haupträder **7**, **8** in eine Richtung parallel zu einer Längsachse **27** der Erntemaschine **1** relativ zueinander bewegbar sind. Auf diese Weise ist es mittels des Gurtspannorgans **24** möglich, den Laufgurt **10** zu spannen. Insbesondere kann das Gurtspannorgan **24** mit einer zugehörigen, in den Figuren nicht dargestellten Steuerungseinrichtung zusammenwirken, sodass die auf den Laufgurt **10** wirkende Spannung fortwährend auf einem vorgegebenen Sollwert gehalten wird. Das Gurtspannorgan **24** kann hierzu insbesondere von einer Kolben-Zylinder-Einheit gebildet sein, die je nach Spannungszustand des Laufgurts **10** den Abstand zwischen den Haupträdern **7**, **8** des Raupenlaufwerks **6** verändert.

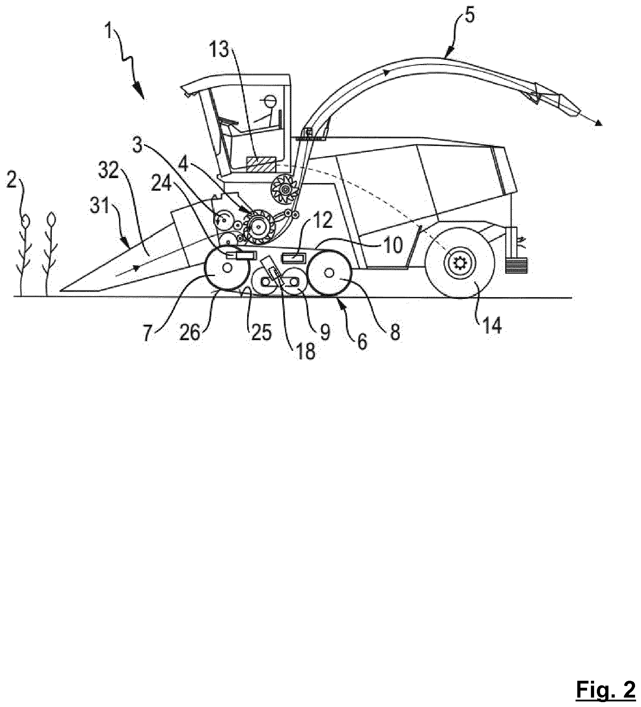

In dem gezeigten Beispiel verfügt das Raupenlaufwerk **6** der erfindungsgemäßen Erntemaschine **1** über zwei Abhebeorgane **12**, **18**. Ein erstes Abhebeorgan **12** ist primär dafür vorgesehen, das vordere Hauptrad **7** des Raupenlaufwerks **6** ausgehend von seiner in **Figur 1** dargestellten Nullposition in seine Abhebeposition zu überführen. Diese Abhebeposition des vorderen Hauptrads **7** ist in **Figur 2** veranschaulicht. Dort ist besonders gut erkennbar, dass das erste Abhebeorgan **12** vollständig eingefahren ist, während das zweite Abhebeorgan **18** gegenüber dem in **Figur 1** gezeigten Zustand unverändert ist. Das zweite Abhebeorgan **18** ist hier zwecks Überführung des vorderen Hauptrades **7** von seiner Nullposition in seine Abhebeposition inaktiv.

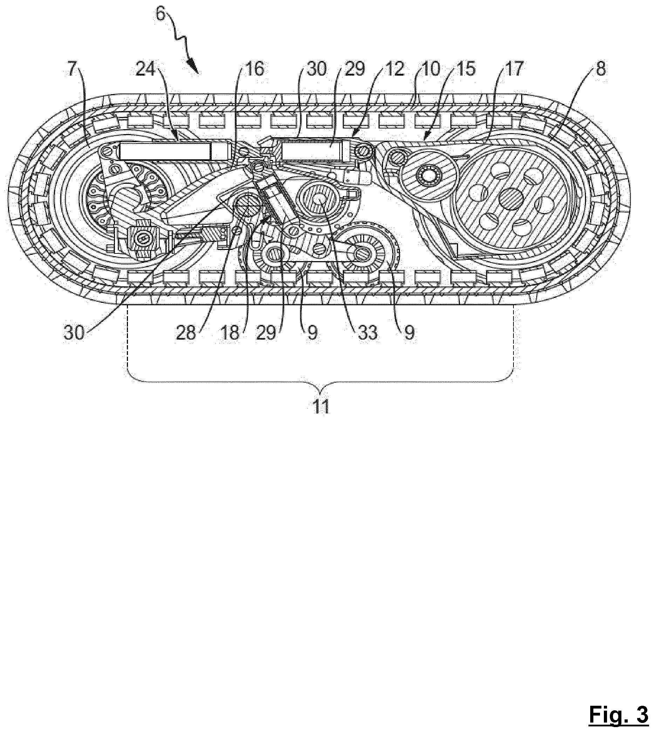

Die Abhebeorgane **12**, **18** sind in dem gezeigten Beispiel vergleichbar zu dem Gurtspannorgan **24** jeweils von einer Kolben-Zylinder-Einheit gebildet. Sie wirken jeweils mit einem Rahmen **15** des zugehörigen Raupenlaufwerks **6** zusammen. Dieser Rahmen **15** ergibt sich besonders gut anhand der Darstellung gemäß **Figur 3****.** Er umfasst insgesamt zwei Rahmenteile **16**, **17**, wobei das eine Rahmenteil **16** mit dem vorderen Hauptrad 7 und das andere Rahmenteil **17** mit dem hinteren Hauptrad **8** zusammenwirken. Das erste Abhebeorgan **12** ist hier so ausgebildet, dass dessen Kolben **29** mit dem vorderen Rahmenteil **16** und dessen Zylinder **30** mit dem hinteren Rahmenteil **17** verbunden sind. Das Abhebeorgan **12** ist dabei horizontal ausgerichtet. Eine Aktivierung des Abhebeorgans **12** führt zu einander entgegengesetzten Krafteinwirkungen auf die beiden Rahmenteile **16**, **17**.

Die Rahmenteile **16**, **17** sind in Kraft übertragender Weise miteinander verbunden, wobei diese Verbindung derart gelenkig ausgebildet ist, dass die Rahmenteile **16**, **17** um eine zu einer Anlenkachse **33** der Erntemaschine **1** parallele Schwenkachse **28** relativ zueinander verschwenkbar sind, wobei die Anlenkachse **33** eine weitere Schwenkachse des jeweiligen Raupenlaufwerks **6** beschreibt, um die das Raupenlaufwerk 6 als Ganzes relativ zu der Erntemaschine **1** verschwenkbar ist. Die Anlenkachse **33** und die Schwenkachse **28** sind voneinander beabstandet angeordnet. Die Schwenkachse **28** ist an einem Gelenk des Raupenlaufwerks **6** ausgebildet.

Das Abhebeorgan **12** ist aktiv ausgebildet, sodass eine Bewegung des Kolbens **29** relativ zu dem Zylinder **30** forciert werden kann. Dies kann insbesondere mittels eines in den Figuren nicht dargestellten Hydrauliksystems bewirkt werden, mittels dessen ein Fluiddruck eines in einem Arbeitsraum des Abhebeorgans **12** befindlichen Arbeitsfluids veränderbar ist. Hierzu verfügt das Hydrauliksystem über ein Hydraulikaggregat, insbesondere eine Hydraulikpumpe. Infolge einer Betätigung des Abhebeorgans **12** werden zunächst dessen Kolben **29** und Zylinder **30** und dadurch schließlich die beiden Rahmenteile **16**, **17** relativ zueinander bewegt und schließlich um die genannte Schwenkachse **28** relativ zueinander verschwenkt, wobei sich insbesondere ausgehend von der Nullposition des vorderen Hauptrades **7** eine Bewegung des vorderen Rahmenteils **16** einstellt, mittels der das vordere Hauptrad **7** von der Oberfläche **25** des Arbeitsfeldes **19** abgehoben und mithin in seiner Abhebeposition überführt wird. Diese Aktivierung des Abhebeorgans **12** geht in dem gezeigten Beispiel damit einher, dass dessen Kolben **29** in dessen Zylinder **30** einfährt. Das Abhebeorgan **12** ist hier doppelwirkend ausgebildet. Das heißt, dass der Kolben **29** sowohl aktiv in den Zylinder **30** eingefahren als auch aktiv aus dem Zylinder **30** ausgefahren werden kann. Das zweite Abhebeorgan **18** ist demgegenüber hier lediglich einfachwirkend ausgebildet, wobei dessen Kolben **29** lediglich aktiv aus dem zugehörigen Zylinder **30** ausgefahren werden kann.

In dem gezeigten Beispiel wird das zweite Abhebeorgan **18** im Zuge der Überführung des vorderen Hauptrades **7** von der Nullposition in ihre Abhebeposition inaktiv gestellt. Hierzu wird das zweite Abhebeorgan **18** von dem gemeinsamen Hydrauliksystem, das im Übrigen beide Abhebeorgane **12**, **18** versorgt, getrennt. Das Abhebeorgan **18** bleibt demzufolge während des Abhebeprozesses des Hauptrades **7** unverändert, während das erste Abhebeorgan **12** vollständig eingefahren wird.

Erfindungsgemäß verfügen die Raupenlaufwerke **6** in dem gezeigten Beispiel jeweils ferner über das bereits genannte zweite Abhebeorgan **18**. Dieses wirkt hier mit dem vorderen Rahmenteil **16** sowie mit den Hilfsrädern **9** zusammen. Das zweite Abhebeorgan **18** ist gleichermaßen von einer Kolben-Zylinder-Einheit gebildet, wobei es leicht gegen die Vertikale geneigt ausgerichtet und mithin im Wesentlich senkrecht orientiert ist. Das Abhebeorgan **18** ist grundsätzlich dazu geeignet, eine Abhebekraft auf den Rahmenteil **16** auszuüben und letzteren auf diese Weise gemeinsam mit dem ersten Abhebeorgan **12** um die Schwenkachse **28** zu verschwenken und dadurch das vordere Hauptrad **7** abzuheben. Die auf den Rahmenteil **16** ausgeübte Abhebekraft des Abhebeorgans **18** wird dann über die Hilfsräder **9** in den Untergrund eingeleitet. Die Aktivierung des zweiten Abhebeorgans **18** führt dazu, dass sich dessen Kolben **29** aus dessen Zylinder **30** heraus bewegt, sodass sich das Abhebeorgan **18** insgesamt verlängert. Wie bereits beschrieben, ist das zweite Abhebeorgan **18** hier einfachwirkend ausgestaltet. Das Einfahren des Kolbens **29** in den Zylinder **30** im Zuge der Absenkung des vorderen Hauptrades **7** erfolgt mithin allein durch Wirkung der Gewichtskraft des vorderen Hauptrades **7**.

In dem gezeigten Beispiel wird das zweite Abhebeorgan **18** - wie vorstehend dargelegt - nicht zur Unterstützung des ersten Abhebeorgans **12** verwendet, um das vordere Hauptrad **7** von dem Untergrund abzuheben. Stattdessen wird es von dem gemeinsamen Hydrauliksystem zeitweise abgetrennt und somit inaktiv geschaltet. Nach erfolgter Überführung des Hauptrades **7** in die Abhebeposition kann das zweite Abhebeorgan **18** wieder dem Hydrauliksystem zugeschaltet werden.

Wie sich insbesondere anhand der Darstellung gemäß **Figur 2** ergibt, führt das Abheben des vorderen Hauptrades **7** zu einer Verkleinerung der Kontaktfläche **26**, die zwischen dem Laufgurt **10** und der Oberfläche **25** des Arbeitsfeldes **19** vorliegt. Diese verkleinerte Kontaktfläche **26** bietet den Vorteil, dass eine Drehung des zugehörigen Raupenlaufwerks **6** um eine vertikale Achse relativ zu der Oberfläche **25** des Arbeitsfeldes **19** mit einem vergleichsweise geringen Eintrag von Scherkräften in das Arbeitsfeld **19** einhergeht. Hierdurch kann insbesondere eine Richtungsänderung der erfindungsgemäßen Erntemaschine **1** bei Vorliegen seiner Raupenlaufwerke **6** mit jeweils abgehobenen vorderen Haupträdern **7** vergleichsweise schadfrei bzw. schadarm vorgenommen werden, das heißt insbesondere unter Inkaufnahme lediglich geringer Beschädigungen eines oberflächennahen Bereichs des Arbeitsfeldes **19**.

In dem gezeigten Beispiel ist das zweite Abhebeorgan **18** derart hergerichtet, dass es eine Dämpfungsfunktion erfüllt und somit als Dämpfungselement wirkt. Als solches kann das Abhebeorgan **18** bewirken, dass insbesondere eine abwärts gerichtete Bewegung des vorderen Hauptrades **7** im Zuge von dessen Absenkung in Richtung der Nullposition gedämpft wird, sodass ein "hartes Aufschlagen" des vorderen Hauptrades **7** auf die Oberfläche **25** des Arbeitsfeldes **19** vermieden wird. Insbesondere kann der Kolben **29** des Abhebeorgans **18** in seinem Inneren einen Gasraum umfassen, der als Gasfeder wirken kann.

Auch das Abhebeorgan **12** kann neben seiner aktiven Funktion zum Abheben des vorderen Hauptrades **7** ferner eine passive Dämpfungsfunktion übernehmen und gewissermaßen als Dämpfungselement wirken. Dies ist insbesondere während eines normalen Betriebs der Erntemaschine **1** von Interesse, in dem der Laufgurt **10** maximal auf dem Arbeitsfeld **19** aufliegt. Für den Fall, dass ein jeweiliges Raupenlaufwerk **6** ein Hindernis überfährt, kommt es zu einer Verschwenkung der beiden Rahmenteile **16**, **17** relativ zueinander. Diese von außen aufgezwungene Relativbewegung der beiden Rahmenteile **16**, **17** zueinander ist sodann mittels des Abhebeorgans **12** in seiner Dämpfungsfunktion dämpfbar, sodass es zu keinen schlagartigen Bewegungen kommt.

Erfindungsgemäß verfügt die Erntemaschine **1** zudem über eine Steuerungseinrichtung **13**, die sich rein schematisch aus den **Figuren 1** **und** **2** ergibt. Die Steuerungseinrichtung **13** wirkt mit den hinteren Lenkrädern **14** zusammen, sodass ein jeweiliger Lenkwinkel, der eine Richtungsänderung der Erntemaschine **1** abweichend von einer Geradeausfahrt bewirkt, mittels der Steuerungseinrichtung **13** erfasst wird. Letztere wirkt ferner zumindest mittelbar mit den Abhebeorganen **12** der beiden Raupenlaufwerke **6** zusammen, sodass die Abhebeorgane **12**, vorzugsweise unabhängig voneinander, zumindest mittelbar mittels der Steuerungseinrichtung **13** ansteuerbar sind. Insbesondere kann die Steuerungseinrichtung **13** unmittelbar mit dem genannten Hydrauliksystem bzw. einem dem zugeordneten Hydraulikaggregat zusammenwirken, mittels dessen schließlich zumindest das Abhebeorgan **12** aktivierbar ist.

In dem gezeigten Beispiel ist die Steuerungseinrichtung **13** derart konfiguriert, dass sie in Abhängigkeit eines Lenkwinkels der Lenkräder **14** das Abhebeorgan **12** aktiviert, sodass das vordere Hauptrad **7** ausgehend von seiner Nullposition in seine Abhebeposition oder umgekehrt überführt wird. Hierbei wird der Kolben **29** des Abhebeorgans **12** in dessen Zylinder **30** eingefahren. Es ist vorgesehen, dass die Aktivierung des Abhebeorgans **12** erst dann stattfindet, wenn der Lenkwinkel einen vorbestimmten Grenzlenkwinkel übersteigt. Letzterer kann beispielsweise zu 13° gewählt sein, was bedeutet, dass ab einem Lenkeinschlag von mehr als 13° die Steuerungseinrichtung **13** automatisch, das heißt ohne weiteres Zutun des Maschinenführers, das Abheben des vorderen Hauptrades **7** bewirkt, sodass die gewünschte Kurvenfahrt der Erntemaschine **1** möglichst schadfrei für das Arbeitsfeld **19** ablaufen kann. Auf diese Weise ist eine automatische Steuerung der Überführung des vorderen Hauptrades **7** zwischen seinen Positionen möglich. Das Abheben wird in dem gezeigten Beispiel gleichwohl erst dann ausgelöst, wenn der beschriebene Grenzlenkwinkel für eine Dauer überschritten wird, die die Dauer eines Schwellenzeitraums übersteigt. Letzterer ist hier zu 0,5 Sekunden gewählt.

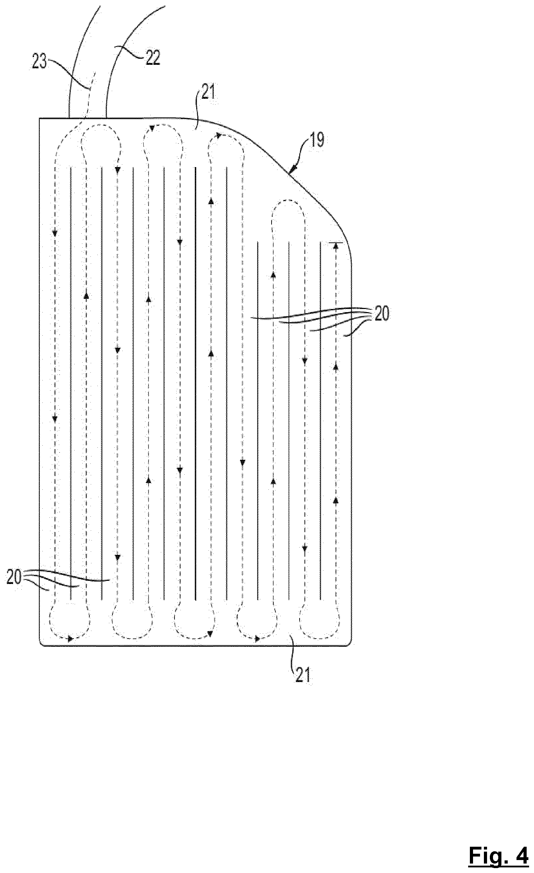

Anhand der Darstellung gemäß **Figur 4** wird ein beispielhafter Arbeitsablauf zur Bearbeitung eines Arbeitsfeldes **19** mittels der erfindungsgemäßen Erntemaschine **1** skizzenhaft veranschaulicht. Die Erntemaschine **1** gelangt zunächst mittels eines Feldweges **22** auf das Arbeitsfeld **19**. Auf dem Arbeitsfeld **19** bewegt sich die Erntemaschine **1** entlang einer in Figur 5 gestrichelt dargestellten Fahrspur **23**. Um das Arbeitsfeld **19** möglichst effizient bearbeiten zu können, wird selbiges in einzelne Fahrstreifen **20** unterteilt, die zumindest im Wesentlichen parallel zueinander angeordnet sind sowie in sich gerade verlaufen. Um nach einer vollständigen Bearbeitung eines jeweiligen Fahrstreifens **20** den jeweils nächsten Fahrstreifen **20** erreichen zu können, muss die Erntemaschine **1** im Bereich eines Vorgewendes **21** des Arbeitsfeldes **19** ein Wendemanöver ausführen. Es versteht sich, dass die Ausführung dieses Wendemanövers regelmäßig mit der Beschreitung einer vergleichsweise engen Kurvenfahrt der Erntemaschine **1** einhergeht. Gemäß vorstehender Erläuterung resultiert hieraus ein Beschädigungsrisiko für zumindest einen oberflächennahen Bereich des Arbeitsfeldes **19**. Derartige Beschädigungen können insbesondere für Grasfelder besonders nachteilig sein.

Erfindungsgemäß werden zur Reduzierung dieses Beschädigungspotenzials während des Wendemanövers die vorderen Haupträder **7** der beiden Raupenlaufwerke **6** der Erntemaschine **1** von dem Arbeitsfeld **19** abgehoben, um die Kontaktfläche **26** zwischen dem Laufgurt **10** und der Oberfläche **25** des Arbeitsfeldes **19** zu reduzieren. Dies bewirkt die bereits beschriebene Reduktion des Eintrags von Scherkräften in das Arbeitsfeld **19**, wodurch schließlich die Beschädigung des letzteren reduziert wird. Das Abheben des vorderen Hauptrades **7** kann mittels der Steuerungseinrichtung **13** automatisch in Abhängigkeit des Lenkwinkels der Erntemaschine **1** in der beschriebenen Weise erfolgen. Ein weiteres Eingreifen des Maschinenführers der Erntemaschine **1** ist mithin nicht unbedingt erforderlich.

### Bezugszeichenliste

- 1: Erntemaschine
- 2: Erntegut
- 3: Förderorgan
- 4: Häckselorgan
- 5: Auswurforgan
- 6: Raupenfahrwerk
- 7: vorderes Hauptrad
- 8: hinteres Hauptrad
- 9: Hilfsrad
- 10: Laufgurt
- 11: unterer Abschnitt des Laufgurts
- 12: Abhebeorgan
- 13: Steuerungseinrichtung
- 14: Lenkrad
- 15: Rahmen
- 16: Rahmenteil
- 17: Rahmenteil
- 18: Abhebeorgan
- 19: Arbeitsfeld
- 20: Arbeitsstreifen
- 21: Vorgewende
- 22: Feldweg
- 23: Fahrspur
- 24: Gurtspannorgan
- 25: Oberfläche des Arbeitsfeldes
- 26: Kontaktfläche des Laufgurts
- 27: Längsachse der Erntemaschine
- 28: Schwenkachse
- 29: Kolben
- 30: Zylinder
- 31: Vorsatzgerät
- 32: Einzugsbereich
- 33: Anlenkachse

## Patentansprüche

1. Erntemaschine (1) zur Ernte von auf einem Arbeitsfeld (19) befindlichen Erntegut (2), insbesondere in Form eines Feldhäckslers, umfassend
mindestens zwei Raupenlaufwerke (6), die an gegenüberliegenden Enden einer Vorderachse der Erntemaschine (1) angeordnet sind, die Raupenlaufwerke (6) jeweils umfassend
- zwei in Fahrtrichtung der Erntemaschine (1) hintereinander angeordnete Haupträder (7, 8),
- mindestens ein zwischen den Haupträdern (7, 8) angeordnetes Hilfsrad (9) sowie
- mindestens einen die Haupträder (7, 8) umspannenden Laufgurt (10),
wobei das Hilfsrad (9) mit einem unteren Abschnitt (11) des Laufgurts (10) zusammenwirken kann, sodass über das jeweilige Raupenlaufwerk (6) in einen Untergrund abzuleitende Kräfte zumindest anteilig mittels des Hilfsrads (9) ableitbar sind,
**dadurch gekennzeichnet, dass**
an den Raupenlaufwerken (6) jeweils mindestens ein Abhebeorgan (12) angeordnet ist, mittels dessen das in Fahrtrichtung der Erntemaschine (1) vordere der beiden Haupträder (7, 8) des jeweiligen Raupenlaufwerks (6) ausgehend von einer Nullposition in eine Abhebeposition überführbar ist und wobei dem zumindest einem Hilfsrad (9) ein Abhebeorgan (18) zugeordnet ist,
wobei die Erntemaschine (1) mindestens eine Steuerungseinrichtung (13) aufweist, mittels der die Überführung des vorderen Hauptrads (7) automatisch in Abhängigkeit eines Lenkwinkels der Erntemaschine (1) auslösbar ist, wobei sämtliche Abhebeorgane (12, 18) mit einem gemeinsamen Hydrauliksystem zusammenwirken und
das mindestens eine dem zumindest einen Hilfsrad (9) zugeordnete Abhebeorgan (18) zeitweise von dem gemeinsamen Hydrauliksystem trennbar ist.

2. Erntemaschine (1) nach Anspruch 1, **dadurch gekennzeichnet, dass** das Abhebeorgan (12) bei Vorliegen des vorderen Hauptrades (7) in seiner Nullposition in einer ausgefahrenen Stellung und bei Vorliegen des Hauptrades (7) in seiner Abhebeposition in einer eingefahrenen Stellung vorliegt.

3. Erntemaschine (1) nach einem der Ansprüche 1 bis 2, **gekennzeichnet durch** mindestens zwei Abhebeorgane (12, 18).

4. Erntemaschine (1) nach Anspruch 3, **dadurch gekennzeichnet, dass** mindestens zwei Abhebeorgane (12, 18), vorzugsweise sämtliche Abhebeorgane (12, 18), unabhängig voneinander hydraulisch ansteuerbar sind, insbesondere eines der Abhebeorgane (12) aktivierbar ist, während ein anderes Abhebeorgan (18) inaktiv ist.

5. Erntemaschine (1) nach Anspruch 1 , **dadurch gekennzeichnet, dass** das vordere Hauptrad (7) des jeweiligen Raupenlaufwerks (6) mittels Wirkung eines Abhebeorgans (12) von seiner Nullposition in seine Abhebeposition überführbar ist, während das weitere Abhebeorgan (18) von dem gemeinsamen Hydrauliksystem getrennt ist.

6. Erntemaschine (1) nach einem der Ansprüche 1 bis 5, **dadurch gekennzeichnet, dass** mindestens ein Abhebeorgan (12, 18), vorzugsweise sämtliche Abhebeorgane (12, 18), in Form einer Kolben-Zylinder-Einheit ausgebildet ist bzw. sind, wobei vorzugsweise mindestens ein Abhebeorgan (12, 18) derart ausgebildet ist, dass ein Kolben (29) des Abhebeorgans (12, 18) sowohl aktiv aus dem zugehörigen Zylinder (30) ausfahrbar als auch aktiv in den zugehörigen Zylinder (30) einfahrbar ist.

7. Erntemaschine (1) nach einem der Ansprüche 1 bis 6, **dadurch gekennzeichnet, dass** die Raupenlaufwerke (6) jeweils einen zweiteiligen Rahmen (15) aufweisen, wobei jeweils eines der Haupträder (7, 8) an einem Rahmenteil (16, 17) des Rahmens (15) angeordnet ist und die Rahmenteile (16, 17) in Kraft übertragender Weise sowie relativ zueinander um eine zu der Vorderachse der Erntemaschine (1) parallele Schwenkachse (28) verschwenkbar miteinander verbunden sind, wobei das Abhebeorgan (12) dazu geeignet ist, die Rahmenteile (16, 17) relativ zueinander zu verschwenken, wobei vorzugsweise das Verschwenken der Rahmenteile (16, 17) mit einer Überführung des vorderen Hauptrades (7) des jeweiligen Raupenlaufwerks (6) zwischen seiner Nullposition und seiner Abhebeposition korrespondiert.

8. Erntemaschine (1) nach Anspruch 7, **dadurch gekennzeichnet, dass** das Abhebeorgan (12) derart mit beiden Rahmenteilen (16, 17) zusammenwirkt, dass eine Abhebekraft entgegengesetzt auf die Rahmenteile (16, 17) wirkt.

9. Verfahren zum Bearbeitung eines Arbeitsfeldes (1) mittels einer Erntemaschine (1), wobei mittels der Erntemaschine (1) eine Fläche des Arbeitsfeldes (19) zumindest abschnittsweise entlang von Arbeitsstreifen (20) überstrichen wird,
**dadurch gekennzeichnet, dass**
in Abhängigkeit eines Lenkwinkels der Erntemaschine (1) ein vorderes Hauptrad (7) mindestens eines Raupenlaufwerks (6) der Erntemaschine (1) von einer Oberfläche (25) des Arbeitsfeldes (19) mittels mindestens eines Abhebeorgans (12) abgehoben wird, sodass sich eine in Kontakt mit der Oberfläche (25) befindliche Kontaktfläche (26) eines Laufgurts (10) des Raupenlaufwerks (6) zumindest zeitweise verringert und wobei einem Hilfsrad (9) des mindestens einen Raupenlaufwerks (6) ein Abhebeorgan (18) zugeordnet ist, wobei in Verbindung mit dem Abheben des vorderen Hauptrades (7) eines jeweiligen Raupenlaufwerks (6) eines der dem zumindest einem Hilfsrad (9) zugeordneten Abhebeorgane (18) inaktiv ist.

10. Verfahren nach Anspruch 9, **dadurch gekennzeichnet, dass** das Abhebeorgan (12) mittels dem das Abheben des vorderen Hauptrads (7) erfolgt von einer Kolben-Zylinder-Einheit gebildet ist, deren Kolben im Zuge des Abhebens, vorzugsweise vollständig, eingefahren wird.

11. Verfahren nach Anspruch 9, **dadurch gekennzeichnet, dass** die Abhebeorgane (12, 18) mit einem gemeinsamen Hydrauliksystem zusammenwirken, wobei vorzugsweise in Verbindung mit dem Abheben des vorderen Hauptrades (7) eines jeweiligen Raupenlaufwerks (6) eines der Abhebeorgane (18) von dem Hydrauliksystem getrennt wird.

12. Verfahren nach einem der Ansprüche 9 bis 11, **dadurch gekennzeichnet, dass** die Raupenlaufwerke (6) jeweils einen zweiteiligen Rahmen (15) aufweisen, wobei jeweils eines der Haupträder (7, 8) an einem Rahmenteil (16, 17) des Rahmens (15) angeordnet ist und die Rahmenteile (16, 17) in Kraft übertragender Weise sowie relativ zueinander um eine zu der Vorderachse der Erntemaschine (1) parallele Schwenkachse (28) verschwenkbar miteinander verbunden sind, wobei mittels Betätigung des mindestens einen Abhebeorgans (12) die Rahmenteile (16, 17) derart relativ zueinander verschwenkt werden, dass das vordere Hauptrad (7) des jeweiligen Raupenlaufwerks (6) zwischen seiner Nullposition und seiner Abhebeposition überführt wird.

13. Verfahren nach einem der Ansprüche 9 bis 12, **dadurch gekennzeichnet, dass** das Abheben des vorderen Hauptrades (7) bei Überschreitung eines oberen Grenzlenkwinkels automatisch ausgelöst wird, wobei der Grenzlenkwinkel maximal 20°, vorzugsweise maximal 17,5°, weiter vorzugsweise maximal 15°, gegenüber einer Nulllenkung, bei deren Einstellung die Erntemaschine (1) geradeaus fährt, beträgt.

14. Verfahren nach einem der Ansprüche 9 bis 13, **gekennzeichnet durch** die folgenden Verfahrensschritte:
a) Nach dem Überstreichen eines Arbeitsstreifens (20) führt die Erntemaschine (1) im Bereich eines Vorgewendes (21) der Arbeitsfläche (19) ein Wendemanöver aus und beginnt sodann mit dem Überstreichen des als nächsten zu bearbeitenden Arbeitsstreifens (20).
b) Im Zuge des Wendemanövers wird das vordere Hauptrad (7) mindestens eines Raupenlaufwerks (6), vorzugsweise beider Raupenlaufwerke (6), automatisch abgehoben.

## Claims

1. A harvesting machine (1), in particular in the form of a forage harvester, for harvesting harvested material (2) located on a working field (19), comprising
at least two track roller units (6) which are disposed on opposite ends of a front axle of the harvesting machine (1), the track roller units (6) respectively comprising
- two main wheels (7, 8) disposed one behind the other in the direction of travel of the harvesting machine (1),
- at least one auxiliary wheel (9) disposed between the main wheels (7, 8), as well as
- at least one endless belt (10) spanning the main wheels (7, 8),
wherein the auxiliary wheel (9) can cooperate with a lower section (11) of the endless belt (10) so that forces to be deflected into the ground via the respective track roller unit (6) can be at least partially deflected by means of the auxiliary wheel (9),
**characterized in that**
at least one lifting unit (12) is respectively disposed on the track roller units (6), by means of which the front main wheel of the two main wheels (7, 8) of the respective track roller unit (6) in the direction of travel can be transferred from a null position into a lifted position and wherein a lifting unit (18) is associated with the at least one auxiliary wheel (9),
wherein the harvesting machine (1) has at least one control device (13),
by means of which the transfer of the front main wheel (7) can be automatically initiated as a function of a steering angle of the harvesting machine (1), wherein
all of the lifting units (12, 18) cooperate with a common hydraulic system, and
at least one lifting unit (18) associated with the at least one auxiliary wheel (9) can be temporarily disconnected from the common hydraulic system.

2. The harvesting machine (1) according to claim 1, **characterized in that** when the front main wheel (7) is in its null position, the lifting unit (12) is in an extended position, and when the front main wheel (7) is in its lifted position, the lifting unit (12) is in a retracted position.

3. The harvesting machine (1) according to claim 1 or claim 2, **characterized by** at least two lifting units (12, 18).

4. The harvesting machine (1) according to claim 3, **characterized in that** at least two lifting units (12, 18), preferably all of the lifting units (12, 18) are hydraulically controllable independently of one another, and in particular, one of the lifting unit (12) can be activated while another lifting unit (18) is inactive.

5. The harvesting machine (1) according to claim 1, **characterized in that** the front main wheel (7) of the respective track roller unit (6) can be transferred from its null position to its lifted position by means of the action of one lifting unit (12), while the other lifting unit (18) is disconnected from the common hydraulic system.

6. The harvesting machine (1) according to one of claims 1 to 5, **characterized in that** at least one lifting unit (12, 18), preferably all of the lifting units (12, 18), is or are configured in the form of a piston and cylinder unit, wherein preferably, at least one lifting unit (12, 18) is configured in a manner such that a piston (29) of the lifting units (12, 18) can be both actively extended from the associated cylinder (30) as well as actively retracted into the associated cylinder (30).

7. The harvesting machine (1) according to one of claims 1 to 6, **characterized in that** the track roller units (6) each have a two-part frame (15), wherein in each case, one of the main wheels (7, 8) is disposed on a frame portion (16, 17) of the frame (15) and the frame portions (16, 17) are connected to each other in a force-transmitting manner as well as being pivotably connected relative to each other about a pivot axis (28) which is parallel to the front axis of the harvesting machine (1), wherein the lifting unit (12) is suitable for pivoting the frame portions (16, 17) relative to each other, wherein preferably, the pivoting of the frame portions (16, 17) corresponds to a transfer of the front main wheel (7) of the respective track roller unit (6) between its null position and its lifted position.

8. The harvesting machine (1) according to claim 7, **characterized in that** the lifting unit (12) cooperates with both frame portions (16, 17) in a manner such that a lifting force acts on the frame portions (16, 17) in the opposite direction.

9. A method for processing a working field (19) by means of a harvesting machine (1) wherein, by means of the harvesting machine (1), an area of the working field (19) is traversed at least in sections along working strips (20),
**characterized in that**
as a function of a steering angle of the harvesting machine (1), a front main wheel (7) of at least one track roller unit (6) of the harvesting machine (1) is lifted from a surface (25) of the working field (19) by means of at least one lifting unit (12) so that a contact area (26) of an endless belt (10) of the track roller unit (6) which is in contact with the surface (25) is at least temporarily reduced
and wherein a lifting unit (18) is associated with an auxiliary wheel (9) of the at least one track roller unit (6), wherein in conjunction with the lifting of the front main wheel (7) of a respective track roller unit (6), one of the lifting units (18) associated with the at least one auxiliary wheel (9) is inactive.

10. The method according to claim 9, **characterized in that** the lifting unit (12) by means of which the lifting of the front main wheel (7) is carried out is formed by a piston and cylinder unit the piston of which is retracted, preferably completely, during the course of lifting.

11. The method according to claim 9, **characterized in that** the lifting units (12, 18) cooperate with a common hydraulic system, wherein preferably, in conjunction with the lifting of the front main wheel (7) of a respective track roller unit (6), one of the lifting units (18) is disconnected from the hydraulic system.

12. The method according to one of claims 9 to 11, **characterized in that** the track roller units (6) each have a two-part frame (15), wherein in each case, one of the main wheels (7, 8) is disposed on a frame portion (16, 17) of the frame (15) and the frame portions (16, 17) are connected to each other in a force-transmitting manner as well as being pivotably connected relative to each other about a pivot axis (28) which is parallel to the front axis of the harvesting machine (1), wherein, by actuating the at least one lifting unit (12), the frame portions (16, 17) can be pivoted relative to each other in a manner such that the front main wheel (7) of the respective track roller unit is transferred (6) between its null position and its lifted position.

13. The method according to one of claims 9 to 12, **characterized in that** lifting of the front main wheel (7) is automatically initiated when an upper limiting steering angle is exceeded, wherein the limiting steering angle is a maximum of 20°, preferably a maximum of 17.5°, more preferably a maximum of 15° with respect to a zero steering angle at which, when it is set, the harvesting machine (1) travels straight ahead.

14. The method according to one of claims 9 to 13, **characterized by** the following steps of the method:
a) after traversing a working strip (20), in the region of a headland (21) of the working area (19), the harvesting machine (1) executes a turning manoeuvre and then begins to traverse the working strip (20) which is to be processed next,
b) during the course of the turning manoeuvre, the front main wheel (7) of at least one of the track roller units (6), preferably both track roller units (6), is automatically lifted.

## Revendications

1. Machine de récolte (1) pour la récolte de produit récolté (2) se trouvant sur un champ de travail (19), en particulier en forme d'ensileuse, incluant
au moins deux trains de roulement à chenilles (6) qui sont disposés à des extrémités opposées d'un essieu avant de la machine de récolte (1), les trains de roulement à chenilles (6) incluant respectivement
- deux roues principales (7, 8) disposées l'une derrière l'autre dans le sens de marche de la machine de récolte (1),
- au moins une roue auxiliaire (9) disposée entre les roues principales (7, 8) ainsi que
- au moins une bande de roulement (10) entourant les roues principales (7, 8)
la roue auxiliaire (9) pouvant coopérer avec une portion inférieure (11) de la bande de roulement (10), de sorte que des forces à dissiper dans un sol par l'intermédiaire du train de roulement à chenilles (6) peuvent être dissipées au moins en partie au moyen de la roue auxiliaire (9),
**caractérisée en ce que**
sur les trains de roulement à chenilles (6) est disposé respectivement au moins un organe de levage (12) au moyen duquel la roue principale avant, dans le sens de la marche de la machine de récolte (1), des deux roues principales (7, 8) du train de roulement à chenilles respectif (6) peut être transférée depuis une position zéro vers une position levée, et à la au moins une roue auxiliaire (9) étant associé un organe de levage (18),
la machine de récolte (1) comportant au moins un équipement de commande (13) au moyen duquel le transfert de la roue principale avant (7) est déclenchable automatiquement en fonction d'un angle de braquage de la machine de récolte (1), tous les organes de levage (12, 18) coopérant avec un système hydraulique commun et
le au moins un organe de levage (18) associé à la au moins une roue auxiliaire (9) étant séparable temporairement du système hydraulique commun.

2. Machine de récolte (1) selon la revendication 1, **caractérisée en ce que** l'organe de levage (12) se trouve dans sa position sortie lorsque la roue principale avant (7) est dans sa position zéro et se trouve dans sa position rentrée lorsque la roue principale (7) est dans sa position levée.

3. Machine de récolte (1) selon une des revendications 1 à 2, **caractérisée par** au moins deux organes de levage (12, 18).

4. Machine de récolte (1) selon la revendication 3, **caractérisée en ce qu'**au moins deux organes de levage (12, 18), préférentiellement tous les organes de levage (12, 18), sont commandables hydrauliquement indépendamment les uns des autres, en particulier un des organes de levage (12) est activable tandis qu'un autre organe de levage (18) est inactif.

5. Machine de récolte (1) selon la revendication 1, **caractérisée en ce que** la roue principale avant (7) du train de roulement à chenilles respectif (6) est transférable de sa position zéro à sa position levée au moyen de l'action d'un organe de levage (12), tandis que l'autre organe de levage (18) est séparé du système hydraulique commun.

6. Machine de récolte (1) selon une des revendications 1 à 5, **caractérisée en ce qu'**au moins un organe de levage (12, 18), préférentiellement tous les organes de levage (12, 18), est, respectivement sont conçus sous la forme d'une unité piston-cylindre, préférentiellement au moins un organe de levage (12, 18) étant conçu de façon qu'un piston (29) de l'organe de levage (12, 18) puisse être aussi bien sorti activement du vérin associé (30) que rentré activement dans le vérin associé (30).

7. Machine de récolte (1) selon une des revendications 1 à 6, **caractérisée en ce que** les trains de roulement à chenilles (6) comportent respectivement un châssis en deux parties (15), respectivement une des roues principales (7, 8) étant disposée sur une partie de châssis (16, 17) du châssis (15) et les parties de châssis (16, 17) étant reliées entre elles de manière à transmettre une force ainsi que de manière pivotante l'une par rapport à l'autre autour d'un axe de pivotement (28) parallèle à l'essieu avant de la machine de récolte (1), l'organe de levage (12) étant apte à faire pivoter les parties de châssis (16, 17) l'une par rapport à l'autre, préférentiellement le pivotement des parties de châssis (16, 17) correspondant à un transfert de la roue principale avant (7) du train de roulement à chenilles respectif (6) entre sa position zéro et sa position levée.

8. Machine de récolte (1) selon la revendication 7, **caractérisée en ce que** l'organe de levage (12) coopère avec les deux parties de châssis (16, 17) de façon qu'une force de levage agisse de manière opposée sur les parties de châssis (16, 17).

9. Procédé de travail d'un champ de travail (1) au moyen d'une machine de récolte (1), au moyen de la machine de récolte (1) une surface du champ de travail (19) étant parcourue au moins par portions le long de bandes de travail (20),
**caractérisé en ce que**
en fonction d'un angle de braquage de la machine de récolte (1), une roue principale avant (7) au moins d'un train de roulement à chenilles (6) de la machine de récolte (1) est soulevée d'une surface (25) du champ de travail (19) au moyen d'au moins un organe de levage (12), de sorte qu'une surface de contact (26) d'une bande de roulement (10) du train de roulement à chenilles (6) se trouvant en contact avec la surface (25) est au moins temporairement réduite,
et à une roue auxiliaire (9) du au moins un train de roulement à chenilles (6) étant associé un organe de levage (18), un des organes de levage (18) associé à la au moins une roue auxiliaire (9) étant inactif en liaison avec le levage de la roue principale avant (7) d'un train de roulement à chenilles respectif (6).

10. Procédé selon la revendication 9, **caractérisé en ce que** l'organe de levage (12) au moyen duquel s'effectue le levage de la roue principale avant (7) est formé par une unité piston-cylindre dont le piston est rentré, préférentiellement entièrement, au cours du levage.

11. Procédé selon la revendication 9, **caractérisé en ce que** les organes de levage (12, 18) coopèrent avec un système hydraulique commun, préférentiellement un des organes de levage (18) étant séparé du système hydraulique en liaison avec le levage de la roue principale avant (7) d'un train de roulement à chenilles respectif (6)

12. Procédé selon une des revendications 9 à 11, **caractérisé en ce que** les trains de roulement à chenilles (6) comportent respectivement un châssis en deux parties (15), respectivement une des roues principales (7, 8) étant disposée sur une partie de châssis (16, 17) du châssis (15) et les parties de châssis (16, 17) étant reliées entre elles de manière à transmettre une force ainsi que de manière pivotante l'une par rapport à l'autre autour d'un axe de pivotement (28) parallèle à l'essieu avant de la machine de récolte (1), les parties de châssis (16, 17) étant pivotées l'une par rapport à l'autre au moyen de l'actionnement du au moins un organe de levage (12), de façon que la roue principale avant (7) du train de roulement à chenilles respectif (6) soit transférée entre sa position zéro et sa position levée.

13. Procédé selon une des revendications 9 à 12, **caractérisé en ce que** le levage de la roue principale avant (7) est déclenché automatiquement en cas de surpassement d'un angle de braquage limite supérieur, l'angle de braquage limite étant au maximum de 20°, préférentiellement au maximum de 17,5°, plus préférentiellement au maximum de 15°, par rapport à un braquage nul en présence duquel la machine de récolte (1) roule tout droit.

14. Procédé selon une des revendications 9 à 13, **caractérisé par** les étapes de procédé suivantes :
a) Après le parcours d'une bande de travail (20), la machine de récolte (1) effectue une manoeuvre de retournement dans la zone d'une tournière (21) de la surface de travail (19) et commence ensuite à parcourir la bande de travail suivante à travailler (20).
b) Au cours de la manoeuvre de retournement, la roue principale avant (7) au moins d'un train de roulement à chenilles (6), préférentiellement des deux trains de roulement à chenilles (6), est levée automatiquement.
